# FASCICULE DE BREVET EUROPEEN

(11) **EP 2 129 901 B1**
(45) Date de publication et mention de la délivrance du brevet: **25.05.2011**
(21) Numéro de dépôt: 08775575.7
(22) Date de dépôt: 20.02.2008
(51) Int. Cl.: F02K 1/72, F02K 1/70

(54) **INVERSEUR DE POUSSEE POUR MOTEUR A REACTION**
SCHUBUMKEHREINHEIT FÜR EIN DÜSENTRIEBWERK
THRUST REVERSER FOR A JET ENGINE

(30) Priorité: 04.04.2007 FR 0702445
(43) Date de publication de la demande: 09.12.2009
(73) Titulaire: Aircelle, 76700 Gonfreville L'Orcher (FR)
(72) Inventeur: VAUCHEL, Guy Bernard, F-76600 Le Havre (FR)
(74) Mandataire: Gaillarde, Frédéric F. Ch.
(86) Numéro de dépôt international: PCT/FR2008/000219
(87) Numéro de publication internationale: WO 2008/135644

(56) Documents cités:
- EP-A- 0 155 887
- EP-A- 0 780 562
- FR-A- 2 908 109
- GB-A- 2 151 995
- US-A- 4 442 987
- US-B1- 6 340 135

## Description

La présente invention se rapporte à un inverseur de poussée pour moteur à réaction selon la revendication 1.

Un avion est mû par plusieurs turboréacteurs logés chacun dans une nacelle.

Une nacelle présente généralement une structure tubulaire comprenant une entrée d'air en amont du turboréacteur, une section médiane destinée à entourer une soufflante du turboréacteur, une section aval intégrant des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à engendrer d'une part un flux d'air chaud (également appelé flux primaire) issu de la chambre de combustion du turboréacteur, et d'autre part un flux d'air froid (flux secondaire) issu de la soufflante et circulant à l'extérieur du turboréacteur à travers un passage annulaire, également appelé veine, formé entre une structure interne définissant un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée engendrée par le turboréacteur. Dans cette phase, l'inverseur obstrue la veine du flux froid et dirige ce dernier vers l'avant de la nacelle, engendrant de ce fait une contre-poussée qui vient s'ajouter au freinage des roues de l'avion.

Les moyens mis en oeuvre pour réaliser cette réorientation du flux froid varient suivant le type d'inverseur.

On connaît de la technique antérieure notamment un inverseur de poussée pour nacelle d'avion, comprenant :
- un cadre avant adapté pour être monté en aval du carter de soufflante d'un turboréacteur à double flux logé dans ladite nacelle,
- un capot monté mobile entre une position fermée dans laquelle il recouvre ledit cadre avant, une position ouverte dans laquelle il découvre ledit cadre avant et une position de maintenance dans laquelle il est situé en aval dudit cadre avant,
- des moyens pour déplacer ledit capot entre lesdites positions fermée et ouverte, et
- une structure interne mobile entre une position de fonctionnement dans laquelle elle se trouve partiellement recouverte par ledit cadre avant et est elle-même apte à recouvrir une partie dudit turboréacteur et à définir une veine annulaire d'air froid avec ledit capot, et une position de maintenance située en aval dudit cadre avant.

Dans un tel inverseur de la technique antérieure, l'accès au turboréacteur pour les opérations de maintenance est donc obtenu par déplacement du capot et de la structure interne vers l'aval de l'inverseur (par rapport au flux d'air destiné à circuler dans cet inverseur).

En pratique, le déplacement aval du capot et de la structure interne sont limités, de sorte qu'il n'est possible d'accéder à certains organes du turboréacteur qu'en prévoyant des trappes d'accès sur la structure interne.

On connaît par ailleurs de EP0155887 un inverseur de poussée conforme au préambule de la revendication 1 ci-annexée.

Un tel inverseur de poussée de la technique antérieure, dans lequel l'accès au turboréacteur s'effectue par ouverture vers l'extérieur des demi-capots et des demi-structures internes, ne permet qu'un accès imparfait au turboréacteur, du fait notamment de la présence du cadre avant qui limite la course d'ouverture de ces organes lors des opérations de maintenance.

La présente invention a ainsi notamment pour but de fournir un inverseur de poussée à grilles du type susmentionné permettant de faciliter l'accès au turboréacteur.

On atteint ce but de l'invention avec un inverseur de poussée pour nacelle d'avion comprenant :
- un cadre avant adapté pour être monté en aval du carter de soufflante d'un turboréacteur à double flux logé dans ladite nacelle,
- un capot monté mobile entre une position fermée dans laquelle il recouvre ledit cadre avant et une position ouverte dans laquelle il découvre ledit cadre avant, ce capot comprenant deux demi-capots,
- des moyens pour déplacer ledit capot entre lesdites positions fermée et ouverte,
- une structure interne mobile ayant une position de fonctionnement dans laquelle elle se trouve partiellement recouverte par ledit cadre avant et est elle-même apte à recouvrir une partie dudit turboréacteur et à définir une veine annulaire d'air froid avec ledit capot, cette structure interne comprenant deux demi-structures internes,

cet inverseur étant remarquable en ce que ledit capot et ladite structure interne sont mobiles vers une position intermédiaire de maintenance située en aval dudit cadre avant, dans laquelle les demi-capots et les demi-structures internes sont aptes à s'ouvrir vers l'extérieur.

Ainsi, pour les opérations de maintenance, on commence par déplacer le capot et la structure interne vers l'aval de l'inverseur de manière à dégager la partie de la structure interne qui est recouverte par le cadre avant à grilles, puis on ouvre vers l'extérieur les demi-capots et les demi-structures internes.

Cette ouverture, à laquelle on ne pouvait songer dans l'inverseur de la technique antérieure du fait du recouvrement partiel de la structure interne par le cadre avant, permet un accès aisé à l'ensemble des organes du turboréacteur pour les opérations de maintenance.

Suivant d'autres caractéristiques optionnelles de l'inverseur selon l'invention :
- lesdits demi-capots sont montés coulissants entre lesdites positions fermée et ouverte, sur des premiers rails solidaires desdites demi-structures internes : ces moyens de coulissement sont simples à mettre en oeuvre, et augmentent peu la masse de l'inverseur ;
- lesdites demi-structures internes comprennent des îlots 12 heures aptes à assurer une ouverture vers l'extérieur de concert de ces demi-structures internes avec lesdits demi-capots : cette rotation de concert permet d'ouvrir en une seule opération chaque couple de demi-capot et de demi-structure interne ;
- lesdits premiers rails sont fixés sur lesdits îlots : le déplacement du capot vers sa position ouverte est ainsi obtenu par coulissement de ce capot par rapport à ces îlots ;
- lesdites demi-structures internes sont montées coulissantes entre lesdites positions de fonctionnement et intermédiaire de maintenance, sur des deuxièmes rails eux-mêmes adaptés pour être montés pivotants sur un pylône de support autour d'axes sensiblement parallèles à la direction de coulissage de ces demi-structures internes : ce sont ces deuxièmes rails qui permettent l'ouverture vers l'extérieur des demi-structures ;
- cet inverseur comprend en outre deux demi-cadres supportant lesdits moyens de déplacement et lesdits demi-capots, ces demi-cadres étant mobiles entre une position de fonctionnement dans laquelle ils recouvrent ledit cadre avant tout en laissant passer l'air provenant de ce cadre avant, et une position intermédiaire de maintenance dans laquelle ces demi-cadres sont situés en aval dudit cadre avant et sont aptes à s'ouvrir vers l'extérieur, ces demi-cadres étant montés coulissants entre lesdites positions de fonctionnement et intermédiaire de maintenance sur des deuxièmes rails eux-mêmes adaptés pour être montés pivotants sur un pylône de support autour d'axes sensiblement parallèles à la direction de coulissage de ces demi-cadres : de la sorte, les moyens de déplacement (en général, des vérins) se déplacent avec les demi-cadres vers la position intermédiaire de maintenance, ce qui permet de libérer complètement l'accès au turboréacteur ;
- ledit inverseur comprend des moyens pour réaliser l'étanchéité entre ledit cadre avant et lesdites deux demi-structures internes et, le cas échéant, entre lesdits demi-cadres et lesdites deux demi-structures internes : ceci permet d'éviter toute pénétration d'eau dans la zone de jointure entre ces organes lorsque la structure interne se trouve en position de fonctionnement ;
- lesdits deuxièmes rails sont montés sur des poutres elles-mêmes adaptées pour être montées pivotantes sur un pylône de support autour d'axes sensiblement parallèles à la direction de coulissage desdites demi-structures internes ou desdits demi-cadres : ce mode de réalisation permet de réaliser de manière simple, et sans surpoids notable, la liaison pivotante entre les demi-structures internes et le pylône de support ;
- cet inverseur comprend des moyens de verrouillage aptes à empêcher le déplacement desdits demi-capots et desdites demi-structures et, le cas échéant, desdits demi-cadres, de leurs positions de fonctionnement vers leurs positions intermédiaires de maintenance : ceci évite toute ouverture intempestive de ces organes ;
- ledit cadre avant est dimensionné de manière à assurer le support dudit turboréacteur : ce mode de support du turboréacteur permet une répartition satisfaisante des efforts (poids, poussée, contre-poussée) sur le turboréacteur.
- cet inverseur est à grilles, ces grilles étant montées sur ledit cadre avant,
- cet inverseur est à portes, ces portes faisant partie dudit capot.

La présente invention se rapporte également à une nacelle d'avion équipée d'un inverseur de poussée conforme à ce qui précède.

D'autres caractéristiques et avantages de la présente invention apparaîtront à la lumière de la description qui va suivre et à l'examen des figures annexées dans lesquelles :
- la figure 1 est une vue en perspective d'un ensemble propulseur pour avion, incorporant un inverseur selon l'invention dont le capot a été ôté,
- la figure 2 est une vue de côté de cet ensemble propulseur, le capot de l'inverseur étant représenté en position fermée,
- la figure 3 est une vue en coupe de l'ensemble propulseur de la figure 2, prise selon la ligne III-III de cette figure,
- la figure 4 est une vue de détaille de la zone IV de la figure 3,
- la figure 5 est une vue analogue à celle de la figure 2, l'inverseur selon l'invention étant représenté en position intermédiaire de maintenance,
- la figure 6 est une figure analogue aux figures 2 et 5, l'inverseur selon l'invention étant représenté en position ouverte de maintenance,
- la figure 7 est une vue en coupe de l'ensemble propulseur de la figure 6, prise selon la ligne VII-VII de cette figure,
- la figure 8 est une vue de détail de la zone VIII de la figure 7,
- la figure 9 représente en perspective une partie de l'îlot 12 heures de l'une des demi structures internes de l'inverseur des figure 1 à 8,
- la figure 10 est une vue analogue à la figure 4, prise dans la zone de coopération dudit îlot avec le cadre avant à grilles de l'inverseur selon l'invention, lorsque cet inverseur se trouve en position de fonctionnement,
- la figure 11 est une vue de côté de cette zone, c'est à dire une vue prise selon la direction de la flèche XI de la figure 10,
- la figure 12 représente une variante du mode de liaison entre un îlot 12 heures de la structure interne de l'inverseur selon l'invention et une poutre montée pivotante sur un pylône de support,
- les figures 13 et 14 sont des vues analogues aux figures 4 et 8 de variantes de réalisation du mode de liaison d'un îlot 12 heures avec une poutre pivotante,
- la figure 15 est une vue analogue à celle de la figure 1, pour un deuxième mode de réalisation de l'inverseur selon l'invention comprenant deux demi-cadres mobiles, ces demi-cadres étant représentés en position de fonctionnement,
- la figure 16 est une vue de détail de la zone XVI représentée sur la figure 15,
- la figure 17 est analogue à la figure 15, les deux demi-cadres mobiles étant représentés en position de maintenance,
- la figure 18 représente la zone de détail XVI lorsque les deux demi-cadres mobiles passent de leur position de fonctionnement vers leur position intermédiaire de maintenance,
- la figure 19 représente les deux cadres mobiles (un seul d'entre eux étant visible sur cette figure) en position de maintenance ouverte vers l'extérieur,
- les figures 20 et 21 sont respectivement analogues aux figures 9 et 11 pour ce deuxième mode de réalisation, et
- la figure 22 est une vue analogue à la figure 21, l'îlot 12 heures et le demi-cadre mobile associé étant représentés en position intermédiaire de maintenance.

Dans l'ensemble de ces figures, on représenté le cas particulier d'un inverseur à grilles, mais la présente invention couvre également le cas d'inverseurs à portes.

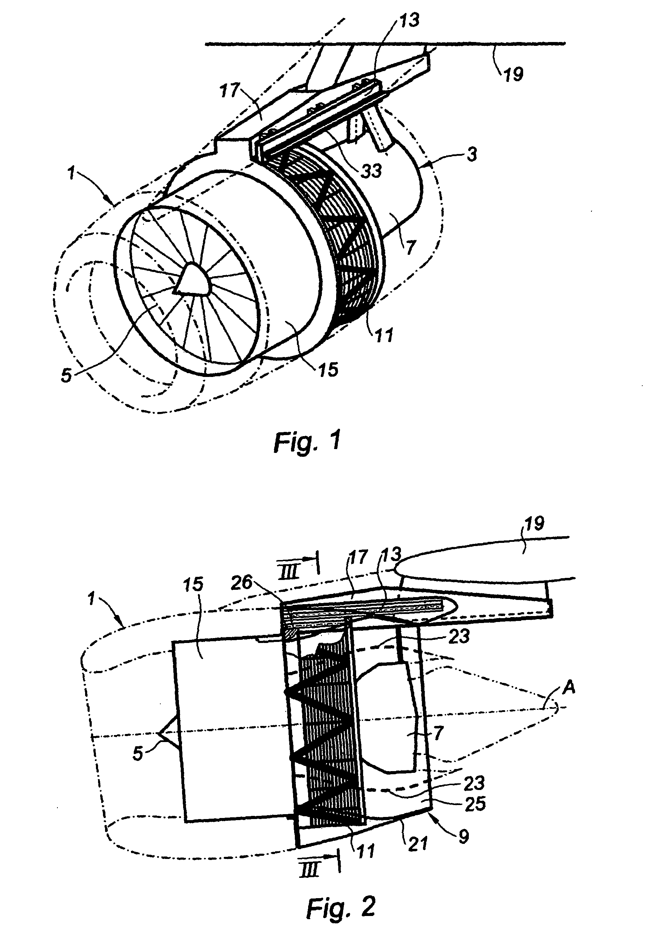

On se reporte à présent à la figure 1, sur laquelle on peut voir que l'ensemble propulseur comprend une nacelle 1 enveloppant un turboréacteur 3 comportant d'une part une soufflante 5 et d'autre part un moteur 7.

Cet ensemble propulseur comprend également un inverseur de poussée 9 (voir figure 2) dont seul un cadre avant à grilles 11 et une poutre pivotante 13 ont été représentés sur la figure 1.

Le cadre avant à grilles 11 est de préférence fixé sur le carter 15 de la soufflante 5.

Ce cadre avant à grilles 11 peut éventuellement avoir une fonction structurante, c'est-à-dire une fonction de liaison du turboréacteur 3 avec un pylône de support 17 destiné à être fixé sous l'aile 19 d'un avion.

On se reporte plus particulièrement à la figure 2, sur laquelle on a représenté l'inverseur 9 selon l'invention en position fermée.

Outre le cadre avant à grille 11, cet inverseur 9 comprend un capot 21 et une structure interne 23 apte à recouvrir partiellement le moteur 7 du turboréacteur 3, et à définir une veine annulaire d'air froid en provenance de la soufflante 5.

On notera en outre que des moyens d'actionnement tels que des vérins 26 sont interposés entre le cadre avant à grilles 11 et le capot 21.

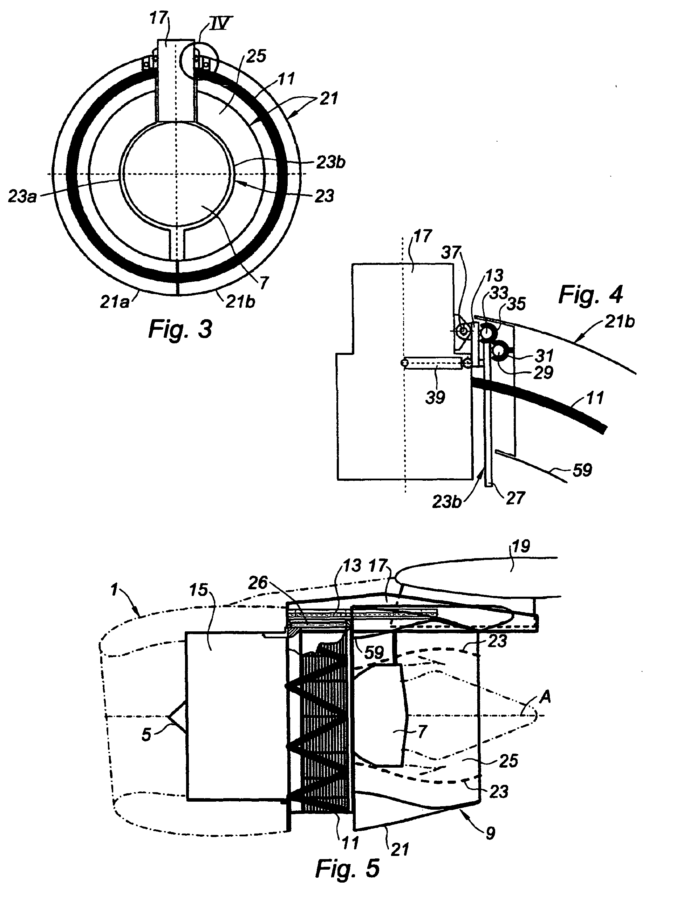

La figure 3 permet de voir la manière dont les différents organes de l'inverseur sont agencés les uns par rapport aux autres, et permet de visualiser la veine d'air froid annulaire 25.

Comme on peut le voir également sur cette figure, le capot 21 comprend en fait deux demi-capots 21a et 21b et la structure interne 23 comprend deux-demi structures internes 23a, 23b.

Comme on peut le voir sur la figure 4, le capot 21 est monté coulissant sur une partie sensiblement verticale 27 de la demi structure interne 23b, appelée "îlot 12 heures", par l'intermédiaire d'un premier rail 29 coopérant avec une première glissière 31.

L'îlot 12 heures 27 est lui-même monté coulissant par l'intermédiaire d'un deuxième rail 33 et d'une deuxième glissière 35, sur la poutre 13.

Cette poutre 13 est elle-même montée pivotante sur le pylône 17, autour d'un axe sensiblement parallèle aux rails 29 et 33, c'est-à-dire sensiblement parallèle à l'axe A de l'ensemble propulseur.

On prévoit au moins deux points d'articulation 37 de la poutre 13 par rapport au pylône 17.

On peut également prévoir des moyens d'assistance au pivotement de la poutre 13, tels qu'un ou plusieur(s) vérin(s) 39.

Il faut bien entendu comprendre que le demi-capot 21 a et la demi-structure 23a sont reliées l'une à l'autre ainsi qu'au pylône 17 par des moyens identiques à ceux qui viennent d'être décrits.

La position intermédiaire de maintenance représentée à la figure 5 est obtenue par coulissage de l'ensemble formé par le capot 21 et la structure interne 23, sur le deuxième rail 33, permettant ainsi d'amener ce capot et cette structure interne en aval du cadre avant à grilles 11.

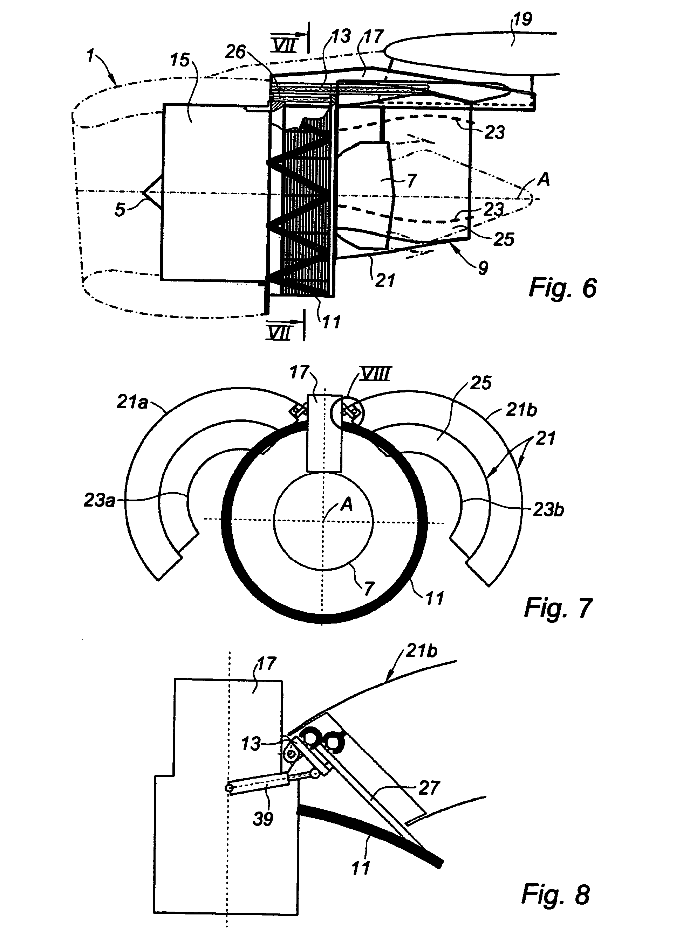

Comme cela est visible sur les figures 6 à 8, la position ouverte de maintenance est ensuite obtenue en faisant pivoter vers l'extérieur les poutres 13, et donc chaque demi-ensemble de demi-capot et de demi-structure interne associés 21a, 23a d'une part et 21b, 23b d'autre part.

Comme cela est particulièrement visible sur la figure 7, ce pivotement vers l'extérieur de ces demi-ensembles permet ainsi un accès très aisé au moteur 7.

A noter que le premier rail 29 et la première glissière 31 permettent un coulissement du capot 21 par rapport à la structure interne 23, dans le cadre d'un fonctionnement de l'inverseur selon un mode classique.

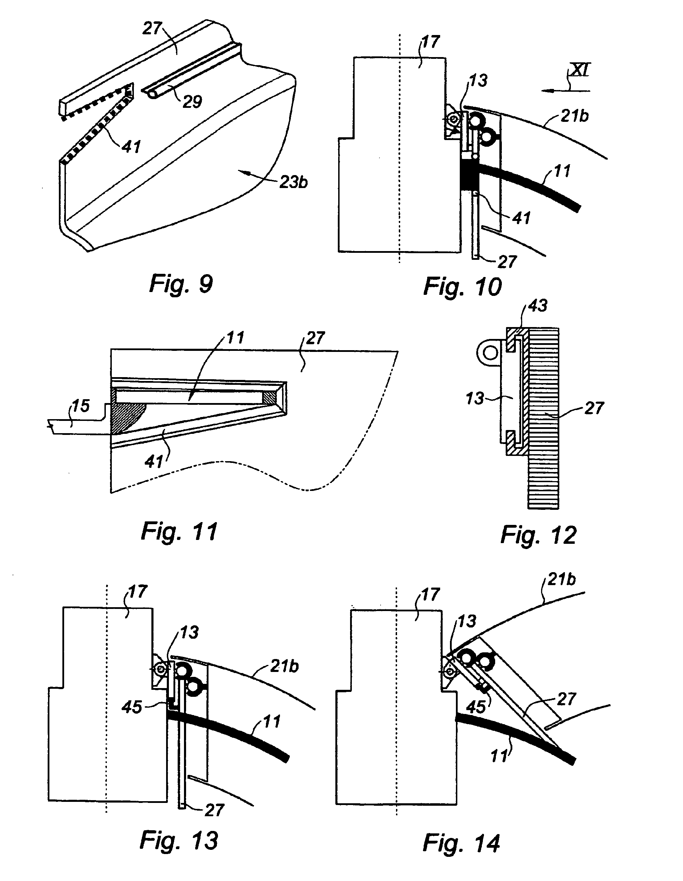

Sur les figures 9 à 11, on peut voir qu'il est avantageux de prévoir un joint 41 par exemple en silicone dans la zone de chaque îlot 12 heures 27 destinée à s'encastrer sur le cadre avant à grilles 11 lorsque la structure interne 23 se trouve en position de fonctionnement.

Comme cela est visible sur la figure 9, dans ce premier mode de réalisation, la dite zone de coopération présente sensiblement la forme d'une échancrure.

On a représenté sur la figure 12 une variante du mode de liaison entre l'îlot 12 heures 27 et la poutre 13 : dans cette variante, une pièce intermédiaire en C 43 est interposée entre l'îlot 12 heures 27 et la poutre 13.

Cette pièce 43 assure donc en fait une double liaison à glissière sur les parties supérieure et inférieure de la poutre 13.

Dans la variante représentée aux figures 13 et 14, on a prévu un doigt 45 qui ne vient coopérer avec la poutre 13 qu'à partir du moment où la structure interne 23 se trouve dans sa position intermédiaire de maintenance.

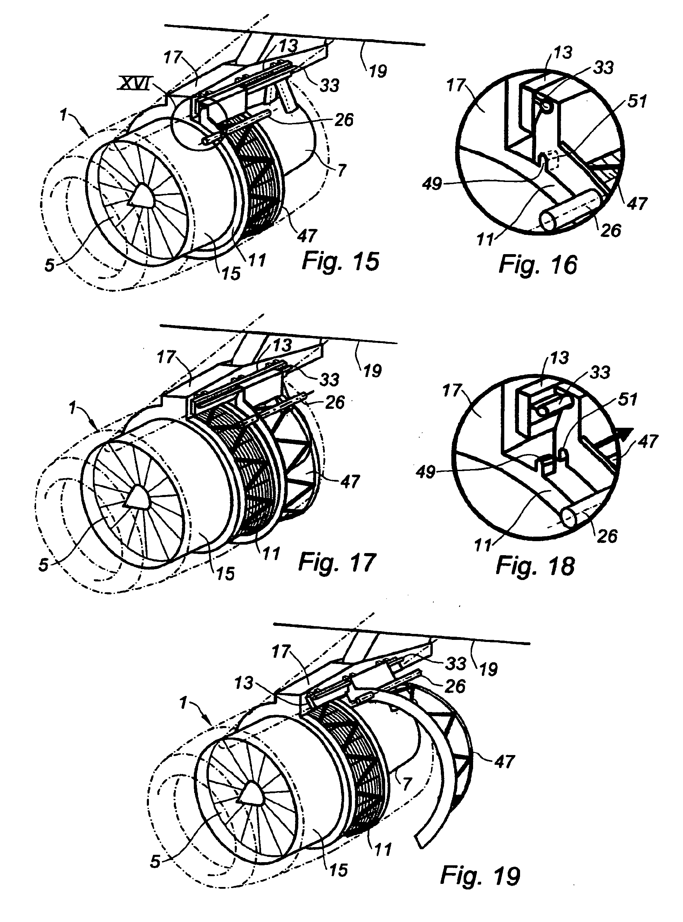

On se reporte à présent à la figure 15, sur laquelle on a représenté un deuxième mode de réalisation selon l'invention.

Ce mode de réalisation diffère du précédent en ceci que les deux demi capots 21a, 21b, qui ne sont pas représentés sur la figure 15, sont montés respectivement sur deux demi-cadres mobiles, un seul d'entre eux, portant la référence 47, étant visible sur la figure 15 : ces deux demi-cadres sont disposés de part et d'autre du pylône 17.

Dans ce cas, les vérins 26 d'actionnement des deux demi capots 21a, 21b entre une position fermée dans laquelle ils recouvrent les deux demi-cadres 47 et une position ouverte dans laquelle ils sont situés en aval de ces deux demi-cadres, sont montés sur ces demi-cadres 47.

Ces demi-cadres 47 sont montés chacun coulissant sur un ensemble de poutre 13 et de deuxième rail 33 analogues à ceux du mode de réalisation précédent.

Par ailleurs, chaque demi-capot 21a, 21b est également monté coulissant sur l'îlot 12 heures 27 associé grâce à un système de premier rail 29 et de première glissière 31 analogues à ceux du mode de réalisation précédent.

Il doit être compris que les demi-cadres mobiles 47 sont agencés de manière à pouvoir laisser passer l'air provenant des grilles du cadre avant 11 lorsqu'ils se trouvent dans la position de la figure 15.

La position intermédiaire de maintenance de la figure 17 se déduit de la position de la figure 15 par un coulissement des demi-cadres 47 sur les deuxièmes rails 33, permettant d'amener les deux demi-capots 21a, 21b et les deux demi-structures internes 23a, 23b dans la même position que celle représentée à la figure 5 pour le mode de réalisation précédent.

La position ouverte de maintenance représentée à la figure 19 est obtenue par pivotement vers l'extérieur des deux poutres 13, et donc des deux demi-cadres 47 ainsi que des deux demi-capots 21a, 21b, et des deux demi-structures 23a, 23b.

On notera que lors de ce pivotement, les vérins 26 sont embarqués avec les deux demi-cadres 47, libérant ainsi complètement l'accès au moteur 7.

Comme cela est visible sur les figures 16 et 18, on peut avantageusement prévoir un ergot 49 solidaire du cadre avant 11 et apte à coopérer avec une encoche complémentaire 51 formée dans le demi-cadre 47 correspondant, cet ergot et cette encoche étant agencés de manière à empêcher l'ouverture vers l'extérieur du demi-cadre 47 lorsqu'il se trouve en position de fonctionnement (figure 16), et à autoriser l'ouverture vers l'extérieur de ce demi-cadre lorsqu'il se trouve en aval de cette position de fonctionnement, c'est-à-dire en position intermédiaire de maintenance (voir figure 18).

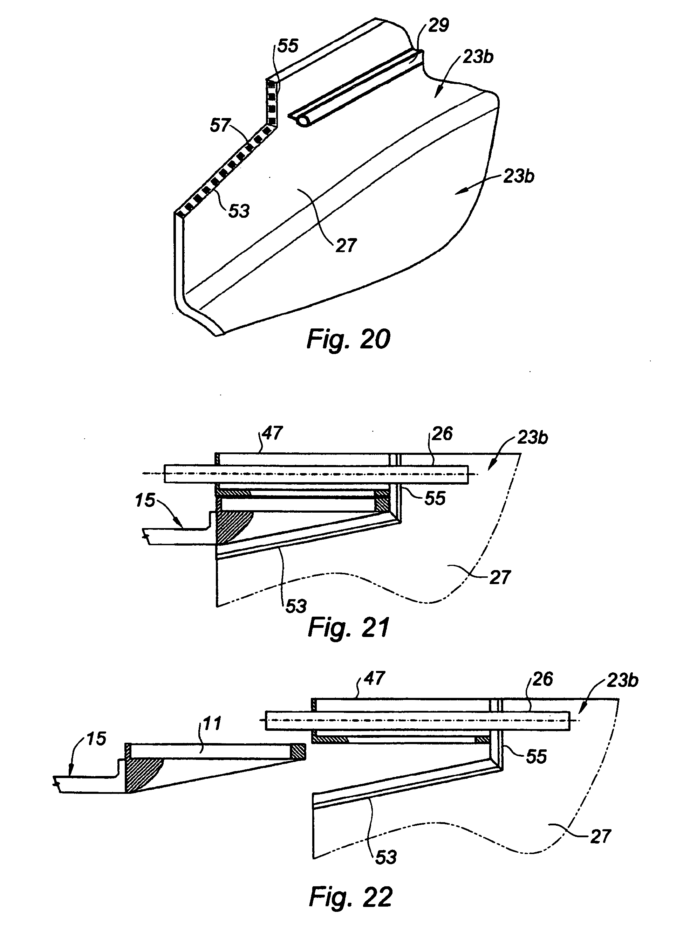

Comme cela est visible sur les figures 20 à 22, la zone de chaque îlot 12 heures destinée à coopérer avec le cadre avant à grilles 11 et avec un demi-cadre 47 présente deux bords 53, 55 sur lesquels est déposé un joint en silicone 57, permettant d'assurer l'étanchéité de la liaison des îlots 12 heures 27 de la structure interne 23 avec le cadre avant 11 et les demi-cadres 47, en position de fonctionnement, représentée sur la figure 21.

En position intermédiaire de maintenance représentée à la figure 22, les demi-cadres 47 et les demi-structures 23 associées coulissent de concert en aval du cadre avant 11.

Le mode de fonctionnement et les avantages de l'inverseur selon l'invention résultent directement de la description qui précède.

En mode de fonctionnement normal, l'inverseur de poussée 9 se trouve dans la position représentée à la figure 2 c'est-à-dire que le capot 21 recouvre complètement le cadre avant à grilles 11, empêchant de la sorte tout flux d'air provenant de la veine annulaire 25 de circuler à travers les grilles de ce cadre.

Lorsque l'avion atterrit, on fait coulisser les deux demi-capots 21a, 21b (voir figures 3 et 4) sur les premiers rails 29, de manière que ces deux demi-capots découvrent le cadre avant à grilles 11.

Ceci permet à un flux d'air froid provenant de la veine 25 de traverser ces grilles et ainsi d'exercer une contre poussée apte à contribuer au freinage de l'avion.

Lors de cette ouverture du capot 21, la structure interne 23 demeure bien entendu immobile autour du moteur 27.

Une fois le freinage réalisé, le capot 21 revient en position de fermeture dans laquelle il recouvre le cadre avant de grilles 11 étant noté que ces mouvements d'ouverture et de fermeture du capot 21 sont permis par les vérins 26.

Dans le mode de réalisation des figures 15 et suivantes, la commande des positions d'ouverture et de fermeture du capot 21 se déroule de manière analogue à ce qui vient d'être décrit, étant entendu que lorsque le capot 21 est ouvert, le flux d'air froid provenant de la veine annulaire 25 traverse non seulement les grilles du cadre avant 11 mais également les demi-cadres 47.

Lorsqu'on souhaite intervenir sur le moteur 7 du turboréacteur 3, on commence à faire coulisser l'ensemble formé par le capot 21 et la structure interne 23 en aval du cadre avant à grilles 11, de manière à amener cet ensemble dans la position intermédiaire de maintenance représentée à la figure 5.

Ceci permet de dégager la partie de la structure interne 23 ainsi que la partie de la peau interne 59 du capot 21, qui sont recouvertes par le cadre avant à grilles 11.

L'étape suivante consiste alors à ouvrir vers l'extérieur chaque demi ensemble de demi-capot et de demi-structure interne 21a, 23a d'une part et 21b, 23b d'autre part, grâce aux pivotements des poutres 13 part rapport au pylône de support 17.

On peut de la sorte atteindre la position représentée aux figures 6 à 8, permettant une excellente accessibilité à l'ensemble des organes du moteur 7.

Dans le mode de réalisation représenté aux figures 15 et suivantes, les demi-cadres 47 coulissent avec le capot 21 et la structure interne 23 vers la position intermédiaire de maintenance représentée à la figure 17, puis pivotent avec ce capot et cette structure interne vers l'extérieur vers la position ouverte de maintenance représentée à la figure 19.

On notera que du fait que les vérins 26 se déplacent de concert avec les demi-cadres 47, il libèrent complètement l'accès au moteur 7 du turboréacteur 3.

Les moyens d'étanchéité représentés sur les figures 9 à 11 d'une part et 20 à 22 d'autre part permettent une coopération étanche entre la structure interne 23 et le cadre avant 11 (et éventuellement les demi-cadres 47) lorsque l'inverseur se trouve en position de fonctionnement : on évite de la sorte toute infiltration notamment d'eau en direction du moteur 7 du turboréacteur 3.

On notera que l'ergot de verrouillage 49 représenté sur les figures 16 et 18 permet d'éviter toute ouverture intempestive des demi-cadres 47 vers l'extérieur lorsque ceux-ci se trouvent en position de fonctionnement.

On notera également que les modes de liaison des îlots 12 heures 27 avec les poutres 13 représentés sur les figures 12 à 14 permettent une liaison plus solide de ces éléments entre eux assurant un meilleur maintien de la structure lors de la rotation.

Bien entendu, on prévoit avantageusement des moyens classiques de verrouillage des déplacements des demi-capots 21a, 21b, et des demi-structures 23a 23b de leur position de fonctionnement vers leur position intermédiaire de maintenance d'une part et de leur position intermédiaire de maintenance vers leur position ouverte de maintenance d'autre part.

Ceci permet d'éviter tout déplacement intempestif de ces organes susceptible d'avoir de grave conséquence.

Bien entendu, la présente invention n'est nullement limitée aux modes de réalisation décrits et représentés, fournis à titre de simples exemples illustratifs.

Comme cela a déjà été indiqué plus haut, la présente invention couvre également le cas d'inverseurs à portes : dans ce cas, les portes seraient intégrées au capot 21, et les positions dites fermée et ouverte de ce capot seraient respectivement les positions dans lesquelles ces portes sont fermées et ouvertes, recouvrant ainsi ou découvrant respectivement le cadre avant.

## Revendications

1. Inverseur de poussée (9) pour nacelle d'avion (1) comprenant :
- un cadre avant (11) adapté pour être monté en aval du carter de soufflante (15) d'un turboréacteur à double flux (3) logé dans ladite nacelle (1),
- un capot (21) monté mobile entre une position fermée dans laquelle il recouvre ledit cadre avant (11) et une position ouverte dans laquelle il découvre ledit cadre avant (11), ce capot (21) comprenant deux demi-capots (21a, 21b),
- des moyens (26) pour déplacer ledit capot (21) entre lesdites positions fermée et ouverte,
- une structure interne (23) mobile ayant une position fonctionnement dans laquelle elle se trouve partiellement recouverte par ledit cadre avant (11) et est elle-même apte à recouvrir une partie dudit turboréacteur (3) et à définir une veine annulaire d'air froid (25) avec ledit capot (21), cette structure interne (23) comprenant deux demi-structures internes (23a, 23b),
cet inverseur (9) étant **caractérisé en ce que** ledit capot (21) et ladite structure interne (23) sont mobiles vers une position intermédiaire de maintenance située en aval dudit cadre avant (11), dans laquelle les demi-capots (21a, 21b) et les demi-structures internes (23a, 23b) sont aptes à s'ouvrir vers l'extérieur.

2. Inverseur (9) selon la revendication 1, **caractérisé en ce que** lesdits demi-capots (21a, 21b) sont montés coulissants entre lesdites positions fermée et ouverte, sur des premiers rails (29) solidaires desdites demi-structures internes (23a, 23b).

3. Inverseur (9) selon l'une des revendications 1 et 2, **caractérisé en ce que** lesdites demi-structures internes (23a, 23b) comprennent des îlots 12 heures (27) aptes à assurer une ouverture vers l'extérieur de concert de ces demi-structures internes (23a, 23b) avec lesdits demi-capots (21a, 21b).

4. Inverseur (9) selon les revendications 2 et 3, **caractérisé en ce que** lesdits premiers rails (29) sont fixés sur lesdits îlots (27).

5. Inverseur (9) selon l'une quelconque des revendications précédentes, **caractérisé en ce que** lesdites demi-structures internes (23a, 23b) sont montées coulissantes entre lesdites positions de fonctionnement et de maintenance, sur des deuxièmes rails (33) eux-mêmes adaptés pour être montés pivotants sur un pylône de support (17) autour d'axes sensiblement parallèles à la direction de coulissage de ces demi-structures internes (23a, 23b).

6. Inverseur (9) selon l'une quelconque des revendications 1 à 4, **caractérisé en ce qu'**il comprend en outre deux demi-cadres (47) supportant lesdits moyens de déplacement (26) et lesdits demi-capots (21a, 21b), ces demi-cadres (47) étant mobiles entre une position de fonctionnement dans laquelle ils recouvrent ledit cadre avant (11) tout en laissant passer l'air provenant de ce cadre avant, et une position intermédiaire de maintenance dans laquelle ces demi-cadres (47) sont situés en aval dudit cadre avant (11) et sont aptes à s'ouvrir vers l'extérieur, ces demi-cadres (11) étant montés coulissants entre lesdites positions de fonctionnement et intermédiaire de maintenance sur des deuxièmes rails (33) eux-mêmes adaptés pour être montés pivotants sur un pylône de support (17) autour d'axes sensiblement parallèles à la direction de coulissage de ces demi-cadres (47).

7. Inverseur (9) selon la revendication 6, **caractérisé en ce qu'**il comprend des moyens (57) pour réaliser l'étanchéité entre lesdits demi-cadres (47) et lesdites demi-structures internes (23a, 23b).

8. Inverseur (9) selon l'une quelconque des revendications précédentes, **caractérisé en ce qu'**il comprend des moyens pour réaliser l'étanchéité entre ledit cadre avant (11) et lesdites deux demi-structures internes (23a, 23b).

9. Inverseur (9) selon l'une des revendications 5 ou 6, **caractérisé en ce que** lesdits deuxièmes rails (33) sont montés sur des poutres (13) elles-mêmes adaptées pour être montées pivotantes sur un pylône de support (17) autour d'axes sensiblement parallèles à la direction de coulissage desdites demi-structures internes (23a, 23b) ou desdits demi-cadres (47).

10. Inverseur (9) selon la revendication 6, **caractérisé en ce qu'**il comprend des moyens de verrouillage aptes à empêcher le déplacement desdits demi-capots (21a, 21b) et desdites demi-structures (23a, 23b) et, le cas échéant, desdits demi-cadres (47), de leurs positions de fonctionnement vers leurs positions de maintenance.

11. Inverseur (9) selon l'une quelconque des revendications précédentes, **caractérisé en ce que** ledit cadre avant (11) est dimensionné de manière à assurer le support dudit turboréacteur (3).

12. Inverseur (9) selon l'une quelconque des revendications précédentes, **caractérisé en ce qu'**il est à grilles, ces grilles étant montées sur ledit cadre avant (11).

13. Inverseur selon l'une quelconque des revendications précédentes, **caractérisé en ce qu'**il est à portes, ces portes faisant partie dudit capot (21).

14. Nacelle d'avion, **caractérisée en ce qu'**elle est équipée d'un inverseur de poussée (9) conforme à l'une quelconque des revendications précédentes.

## Claims

1. A thrust reverser (9) for an aircraft nacelle (1) comprising:
- a front frame (11) adapted so as to be mounted downstream from the fan case (15) of a double flow turbine engine (3) housed in said nacelle (1),
- a cowl (20) mounted so as to be mobile between a closed position in which it covers said front frame (11) and an open position in which it exposes said front frame (11), this cowl (21) comprising two half-cowls (21a, 21b),
- means (26) for displacing said cowl (21) between said closed and open positions,
- a mobile internal structure (23) having an operating position in which it is found partly covered by said front frame (11) and is itself capable of covering a portion of said turbine engine (3) and of defining an annular cold air vein (25) with said cowl (21), this internal structure (23) comprising two internal structure halves (23a, 23b),
this reverser (9) being **characterized in that** said cowl (21) and said internal structure (23) are movable towards an intermediate maintenance position located downstream from said front frame (11), wherein the half-cowls (21a, 21b) and the internal structure halves (23a, 23b) are capable of opening outwards.

2. The reverser (9) according to claim 1, **characterized in that** said half-cowls (21a, 21b) are slidably mounted between said closed and open positions, on first rails (29) integral with said internal structure halves (23a, 23b).

3. The reverser (9) according to one of claims 1 and 2, **characterized in that** said internal structure halves (23a, 23b) comprising 12 hour islands (27) capable of ensuring an opening outwards together with these internal structure halves (23a, 23b) with said half-cowls (21a, 21b).

4. The reverser (9) according to claims 2 and 3, **characterized in that** said first rails (29) are attached on said islands (27).

5. The reverser (9) according to any of the preceding claims, **characterized in that** said internal structure halves (23a, 23b) are slidably mounted between said operating and maintenance positions, on second rails (33) themselves adapted so as to be pivotally mounted on a supporting pylon (17) around axes substantially parallel to the sliding direction of these internal structure halves (23a, 23b).

6. The reverser (9) according to any of claims 1 to 4, **characterized in that** it further comprises two half-frames (47) supporting said displacement means (26) and said half-cowls (21a, 21b), these half-frames (47) being mobile between an operating position in which they cover said front frame (11) while letting through air from this front frame, and an intermediate maintenance position in which these half-frames (47) are located downstream from said front frame (11) and are capable of opening outwards, these half-frames (11) being slidably mounted between said operation and maintenance intermediate positions on second rails (33) themselves adapted so as to be pivotally mounted on a supporting pylon (17) around axes substantially parallel to the sliding direction of these half-frames (47).

7. The reverser (9) according to claim 6, **characterized in that** it comprise means (57) for achieving the seal between said half-frames (47) and said internal structure halves (23a, 23b).

8. The reverser (9) according to any of the preceding claims, **characterized in that** it comprises means for achieving the seal between said front frame (11) and said two internal structure halves (23a, 23b).

9. The reverser (9) according to one of claims 5 or 6, **characterized in that** said second rails (33) are mounted on beams (13) themselves adapted so as to be pivotally mounted on a supporting pylon (17) around axes substantially parallel to the sliding direction of said internal structure halves (23a, 23b) or of said half-frames (47).

10. The reverser (9) according to claim 6, **characterized in that** it comprises locking means capable of preventing displacement of said half-cowls (21a, 21b) and said structure halves (23a, 23b) and, if necessary, of said half-frames (47) from their operating positions towards their maintenance positions.

11. The reverser (9) according to any of the preceding claims, **characterized in that** said front frame (11) is dimensioned so as to ensure the support of said turbine engine (3).

12. The reverser (9) according to any of the preceding claims, **characterized in that** it is with grids, these grids being mounted on said front frame (11).

13. The reverser (9) according to any of the preceding claims, **characterized in that** it is with gates, these gates being part of said cowl (21).

14. An aircraft nacelle, **characterized in that** it is equipped with a thrust reverser (9) according to any of the preceding claims.

## Patentansprüche

1. Schubumkehr (9) für Flugzeugtriebwerksrumpf (1), die umfasst:
- einen vorderen Rahmen (11), der geeignet ist, vor dem Gehäuse des Gebläses (15) eines in dem Rumpf (1) untergebrachten Turbofantriebwerks (3) montiert zu sein,
- eine zwischen einer geschlossenen Stellung, in der sie den vorderen Rahmen (11) bedeckt, und einer geöffneten Stellung, in der sie den vorderen Rahmen (11) freigibt, bewegbar montierte Haube (21), wobei diese Haube (21) zwei Haubenhälften (21a, 21b) umfasst,
- Mittel (26), um die Haube (21) zwischen der geschlossenen und geöffneten Stellung zu verschieben,
- eine bewegbare innere Struktur (23) mit einer Funktionsstellung, in der sie teilweise von dem vorderen Rahmen (11) bedeckt ist und selbst imstande ist, einen Teil des Turbotriebwerks (3) zu bedecken und eine ringförmige Kattluftader (25) mit der Haube (21) zu definieren, wobei diese innere Struktur (23) zwei innere Halbstrukturen (23a, 23b) umfasst,
wobei diese Schubumkehr (9) **dadurch gekennzeichnet ist, dass** die Haube (21) und die innere Struktur (23) in eine Wartungszwtschenstellung bewegbar sind, die sich hinter der vorderen Haube (11) befindet, in der die Haubenhälften (21a, 21b) und die internen Halbstrukturen (23a, 23b) imstande sind, sich nach außen zu öffnen.

2. Schubumkehr (9) nach Anspruch 1, **dadurch gekennzeichnet, dass** die Haubenhälften (21a, 21b) gleitend zwischen der geschlossenen und geöffneten Stellung auf ersten Schienen (29) montiert sind, die mit den internen Halbstrukturen (23a, 23b) verbunden sind.

3. Schubumkehr (9) nach einem der Ansprüche 1 und 2, **dadurch gekennzeichnet, dass** die inneren Halbstrukturen (23a, 23b) 12-Uhr-Inseln (27) umfassen, die imstande sind, eine Öffnung dieser inneren Halbstrukturen (23a, 23b) nach außen in Abstimmung mit den Haubenhälften (21a, 21b) zu gewährleisten.

4. Schubumkehr (9) nach den Ansprüchen 2 und 3, **dadurch gekennzeichnet, dass** die ersten Schienen (29) auf den Inseln (27) befestigt sind.

5. Schubumkehr (9) nach einem der vorangehenden Ansprüche, **dadurch gekennzeichnet, dass** die inneren Halbstrukturen (23a, 23b) auf zweiten Schienen (33) zwischen der Funktions- und Wartungsstellung gleitend montiert sind, die selbst geeignet sind, auf einem Halter (17) um Achsen, die zur Gleitrichtung dieser inneren Halbstrukturen (23a, 23b) etwa parallel sind, drehbar montiert zu sein.

6. Schubumkehr (9) nach einem der Ansprüche 1 bis 4, **dadurch gekennzeichnet, dass** sie weiterhin zwei Halbrahmen (47) umfasst, die die Verschiebemittel (26) und die Haubenhälften (21a, 21b) stützen, wobei diese Halbrahmen (47) zwischen einer Funktionsstellung, in der sie den vorderen Rahmen (11) bedecken, wobei die Luft, die von diesem vorderen Rahmen ausgeht, passieren kann, und einer Wartungszwischenstellung, in der sich diese Halbrahmen (47) hinter dem vorderen Rahmen (11) befinden und imstande sind, sich nach außen zu öffnen, bewegbar sind, wobei diese Halbrahmen (11) zwischen der Funktions- und Wartungszwischenstellung auf zweiten Schienen (33) gleitend montiert sind, die selbst geeignet sind, auf einem Halter (17) um Achsen, die zur Gleitrichtung dieser Halbrahmen (47) etwa parallel sind, drehbar montiert zu sein.

7. Schubumkehr (9) nach Anspruch 6, **dadurch gekennzeichnet, dass** sie Mittel (57) zur Herstellung der Dichtigkeit zwischen den Halbrahmen (47) und den inneren Halbstrukturen (23a, 23b) umfasst.

8. Schubumkehr (9) nach einem der vorangehenden Ansprüche, **dadurch gekennzeichnet, dass** sie Mittel zur Herstellung der Dichtigkeit zwischen dem vorderen Rahmen (11) und den zwei inneren Halbstrukturen (23a, 23b) umfasst.

9. Schubumkehr (9) nach einem der Ansprüche 5 oder 6, **dadurch gekennzeichnet, dass** die zweiten Schienen (33) auf Trägern (13) montiert sind, die selbst geeignet sind, auf einem Halter (17) um Achsen, die zur Gleitrichtung der inneren Halbstrukturen (23a, 23b) oder der Halbrahmen (47) etwa parallel sind, drehbar montiert zu sein.

10. Schubumkehr (9) nach Anspruch 6, **dadurch gekennzeichnet, dass** sie Verriegelungsmittel umfasst, die imstande sind, die Verschiebung der Haubenhälften (21a, 21b) und der Halbstrukturen (23a, 23b) und gegebenenfalls der Halbrahmen (47) von ihren Funktionsstellungen in ihre Wartungsstellungen zu verhindern.

11. Schubumkehr (9) nach einem der vorangehenden Ansprüche, **dadurch gekennzeichnet, dass** der vorderen Rahmen (11) derart bemessen ist, dass die Stützung des Turbotriebwerks (3) gewährleistet ist.

12. Schubumkehr (9) nach einem der vorangehenden Ansprüche, **dadurch gekennzeichnet, dass** sie mit Gittern ist, wobei diese Gitter auf dem vorderen Rahmen (11) montiert sind.

13. Schubumkehr (9) nach einem der vorangehenden Ansprüche, **dadurch gekennzeichnet, dass** sie mit Türen ist, wobei diese Türen Bestandteil der Haube (21) sind.

14. Flugzeugtriebwerksrumpf, **dadurch gekennzeichnet, dass** er mit einer Schubumkehr (9) nach einem der vorangehenden Ansprüche ausgestattet ist.
